# EUROPEAN PATENT SPECIFICATION

(11) **EP 1 105 245 B1**
(45) Date of publication and mention of the grant of the patent: **02.04.2008**
(21) Application number: 99905542.9
(22) Date of filing: 29.01.1999
(51) Int. Cl.: B23K 20/04, B23K 35/24, B23K 20/16, B23K 20/227, C25D 5/12, C23C 14/16

(54) **METHOD OF BONDING OF DISSIMILAR METALS**
VERFAHREN ZUM VERBINDEN VON UNTERSCHIEDLICHEN METALLISCHEN MATERIALIEN
METHODE D'ASSEMBLAGE DE METAUX DISSEMBLABLES

(30) Priority: 29.01.1998 US 73034 P
(43) Date of publication of application: 13.06.2001
(73) Proprietor: Clad Metals LLC, Canonsburg, PA 15317 (US); Groll, William A., McMurray, PA 15317 (US)
(72) Inventor: GROLL, William, A., McMurray, PA 15317 (US)
(74) Representative: Gille Hrabal Struck Neidlein Prop Roos
(86) International application number: PCT/US1999/001974
(87) International publication number: WO 1999/038642

(56) References cited:
- EP-A- 0 319 908
- JP-A- 1 040 187
- JP-A- 1 040 188
- JP-A- 1 087 086
- JP-A- 54 043 152
- JP-A- 63 194 880
- US-A- 5 651 496
- US-A- 5 709 957
- PATENT ABSTRACTS OF JAPAN vol. 013, no. 225 (M-830), 25 May 1989 (1989-05-25) -& JP 01 040187 A (NISSHIN STEEL CO LTD), 10 February 1989 (1989-02-10)

## Description

The present invention relates generally to bonding or cladding sheets of different metals or alloys to one another to form a multilayered composite for various end users such as cookware, electrical contacts and like articles (see claim 1).

Heretofore, it has been common to form composites of dissimilar metals by roll bonding. This technique is successful with certain metals but not all. Problems develop in delamination, particularly when certain objectionable types of oxides are present on the bonding surface(s) of adjacent plates or sheets.

The present invention is directed to overcoming this problem.

In order to achieve a proper bond between metals by conventional roll or pressure bonding, it is necessary to provide clean surface contact between the adjacent surfaces to permit interatomic sharing of electrons between the dissimilar metals to be joined. Certain metals, such as, for example, carbon steel, copper, brass, titanium, zinc and certain aluminum alloys (2000, 3000 and 6000 series) possess oxide surfaces when exposed to the atmosphere which are difficult to bond to, unless expensive measures are taken. The oxides formed on these above-mentioned metals are relatively ductile and, therefore, deform and stretch when roll bonding is attempted. Due to their ductile nature, these oxide layers do not permit the bonding metal to contact the underlying bare substrate metal in order to form the desired interatomic bond alluded to above.

Heretofore, in order to join one of the above-mentioned metals to a dissimilar metal, it is conventional practice to first clean the surface of the metal and then place the metal in a furnace having a reducing atmosphere of, for example, cracked ammonia or carbon monoxide, or the like. Exposure to this furnace atmosphere for a given time will cause the removal of surface oxides. The metal plate or sheet is then quickly moved to a rolling mill and the material is roll bonded to a dissimilar metal. This conventional technique thus requires expensive special controlled atmospheric furnaces and the attendant safety and environmental problems associated with potentially hazardous gases. In addition, it is well-known that the unwanted oxide surfaces can re-form rapidly as the material is transferred from the furnace to the rolling mill. This reoxidation occurs especially as the composite plate enters the roll bite area of the rolling mill. In this roll bite area, the metal in the entry portion of the roll bite is caused to extrude rearwardly, which causes the adjacent plates to continuously separate so as to allow atmospheric oxygen to rapidly gush into the thusly formed gap, causing reoxidation of the clean metal surface. When the oxide forms to an appreciable extent, the roll bond is weakened and delamination can occur.

The prior art has recognized this problem and has proposed a solution which involves welding the perimeter of the plates prior to rolling, which prevents the influx of atmospheric oxygen into the gap formed upstream of the roll bite area. This welding operation, however, represents yet another added expense in capital equipment and labor cost to the finished product.

For coating metal sheet articles It is known (JP-A-1/040187, representing the most relevant state of the art) to coat a steel strip with Al by plating or by immersion in molten Al. Thereafter, a Ti strip or Ti alloy strip is superimposed on the heated aluminium coated steel and roll bonded thereto.

For manufacturing Al-plated steel for cans it is known (EP-A-0 319 908) to provide on electroplated chromium layer on the surface of a steel sheet, to remove a hydrated chromium oxide layer from the surface of the chromium layer and to form an Al plating layer on the chromium layer, so that the chromium layer and the Al layer are stacked In direct contact with each other.

The object of the present invention is to provide superior multilayered composites of dissimilar metals of all kinds.

This object is obtained by a method comprising the features of claim 1.

Further features and improvements of such method are subject matter of claims 2 to 7 dependent to claim 1.

The present invention provides a superior bonded article and a method of bonding a wide variety of metals and metal alloys by applying to at least one or both mating interfaces a thin layer of pure aluminum, then applying heat and pressure to achieve a bond. The thin aluminum layer is preferably applied by an electrolytic plating process or by a physical vapor deposition ("PVD") technique.

The bonding of dissimilar metals has traditionally been achieved by either applying gross reduction at room temperature, lighter reduction in conjunction with heat or explosive bonding. In all of these cases, preparation of the surfaces is critical. As discussed above, surfaces must be clean and, in the case of many prior art metal combinations, free of oxides. The present invention employs the use of heat and pressure for bonding but differs from existing techniques in that the interface of metals to be bonded has at least one mating surface plated with pure aluminum to act as a bonding agent. Bonding by rolling, for example, is dpne without the need for special atmosphere controlled furnaces.

There is no need to provide a reducing or otherwise protective atmosphere, as required in the prior art, because the pure aluminum coating covers the objectionable ductile oxide coating on the first metal sheet or plate and strongly adheres thereto. The pure aluminum coating layer also naturally forms an oxide skin on its exposed surface, but aluminum oxide is a relatively brittle, non-ductile oxide. When the aluminum oxide skin is forced into facing contact with the second metal sheet or plate during roll bonding, the aluminum oxide skin readily fractures and exposes the underlying pure aluminum surface to permit the desired bare metal contact and the interatomic sharing of electrons between the adjacent metals to occur.

Thus, pure aluminum is a beneficial bonding agent for bonding dissimilar metals wherein one or both of the metal sheets or plates to be joined contain a ductile oxide surface. Certain metals, such as, for example, stainless steel and pure or EC (electrical grade) aluminum contain brittle oxide surfaces and do not require an aluminum coating layer to be applied prior to pressure bonding.

An aluminum electroplating technology, known as the Segal process, was developed by Siemens A.G. of Germany. This technique is well-known in the art and the aluminum plating service is commercially available.

According to the present invention, the pure aluminum (bonding agent) layer is applied to the metal plate or sheet by a physical vapor deposition (PVD) technique. The PVD technique is, likewise, well-known in the art. This is applicable as the composite article being made will be subject to very high temperatures, particularly experienced during subsequent welding operations. In such instances, the high temperatures caused by welding oftentimes will produce a harmful intermetallic aluminum compound at the interface between the applied pure aluminum bonding agent layer and the substrate metal. Formation of the intermetallic aluminum compound may cause delamination to occur in the finished clad product due to the brittle nature of such intermetallic compounds. In order to prevent this occurrence, a diffusion barrier layer of chromium is applied to the substrate metal. The chromium is applied by a wet plating process. The pure aluminum bonding agent layer is then applied to the chromium barrier layer by the PVD technique because it is difficult to electroplate aluminum onto chromium. Hence, harmful aluminum intermetallic compounds are not formed during subsequent welding operations because the pure aluminum layer is separated from the substrate metal by the chromium layer which provides a diffusion barrier between the pure aluminum layer and the substrate metal.

As the pure aluminum layer is applied by PVD, no harmful oxides or intermetallics are formed because the process takes place under vacuum conditions.

Pure aluminum is especially conducive to diffusion bonding to other aluminum alloys or other metals, particularly when heated: to temperatures between 204 to 482°C (400°F and 900°F). Plates or sheets of metal which have been prepared by the PVD methods bond readily when heated and put under pressure with a hydraulic press or rolling mill. The pure aluminum layer serves as a protective coating to prevent oxidation of the substrate during heating as well as serving as a bonding agent. The aluminum plating process may be performed upon a wide variety of metals and metal alloys. Some of these include titanium, steel, copper, brass, aluminum alloys and zinc which are all characterized as having ductile oxide surfaces.

Examples of products utilizing the present invention include metal composites which combine high heat conductivity, corrosion resistance and strength, which are particularly suitable for cookware, for example. Such composites consisting of bonded layers of copper, titanium, aluminum, carbon steel and stainless steel in various combinations are suitable for cookware including pots, pans, bakeware and griddles. Composite metal articles utilizing the present invention also include metals which combine high electrical conductivity and light weight, such as, for example, a composite of copper and aluminium, which is particularly useful as electrical conductors or contacts.

By way of an example not covered by the present invention as defined in the appended claims, a copper cored cooking griddle may be constructed by forming a composite plate comprising a thick (approximately 6.35 mm (1/4 inch)) copper core with thin stainless steel layers roll bonded to the outer surfaces thereof. The copper core plate has the pure aluminum layer applied to both surfaces to permit the stainless steel sheets to be roll bonded thereto.

The aluminum layer, applied by electroplating to a substrate of copper, brass, titanium, zinc, carbon steel or the like, is preferably applied in a thickness of from about 0,0127 to 0,0254 mm (0.0005 to 0.001 inch). According to the present invention, the aluminum layer is applied by the PVD technique, with a thickness of from 0,00254 to 0,00762 mm (0.0001 to 0.0003 inch). According to the present invention, the chromium plated diffusion barrier layer is applied in a thickness of from 0,00254 to 0,01016 mm (0.0001 to 0.0004 inch). Actual illustrations of the present invention are presented in the following examples.

### Example I not covered by the present invention as defined in the appended claims

A 6,35 x 305 x 508 mm (1/4 inch x 12 inch x 20 inch) plate of C102 copper was plated on one side with a 0,00254 to 0,00508 mm (one to two mil (0.0001-0.0002 inch)) thickness of pure aluminum using the Segal electroplating process. Before bonding, the plated aluminum surface was sanded with a dry aluminum oxide abrasive to promote roughness and ensure cleanliness. A 9,5 x 305 x 508 mm (3/8 inch x 12 inch x 20 inch) plate of 1145 grade aluminum was also sanded to achieve roughness and cleanliness and the copper plate was placed on top of the aluminum plate with the two sanded surfaces facing each other. The plates were heated to 316°C (600°F) in an oven without a protective atmosphere and promptly fed into the bite of a rolling mill. The mill took a 5% reduction in thickness. The force of reduction caused an aluminum-to-aluminum bond to form. The bond was further strengthened after two additional rolling passes for a total reduction of 10% of thickness. The composite was then heated to 288°C (550°F) to further sinter and strengthen the bond. The resulting copper-aluminum cladded material was tested by the conventional "twist" method, by the "180° bond" method and by the "chisel" method. All tests indicated that an excellent bond had been achieved.

### Embodiment of the present invention:

This example involves the manufacture of a composite article suitable for use as an electrical contact which must undergo a high temperature welding operation at the final installation. As mentioned above, high temperatures experienced during welding can create harmful intermetallic aluminum compounds at the interface between aluminum and a substrate metal, which usually causes serious delamination problems. A plate of C102 copper measuring 152 mm (6 inches) wide x 457 mm (18 inches) long x 6,35 mm (1/4 inch) thick was electroplated on one side with chromium in a wet plating bath. Plating thickness was between 0,01016 to 0,02032 mm (0.0004 - 0.0008 inch). The chromium plated copper plate was then placed in a vacuum chamber of a conventional physical vapor deposition (PVD) apparatus and pure aluminum was applied to the chromium layer to a thickness of about 0,00762 mm (0.0003 inch). Prior to applying the aluminum layer, the chromium oxide naturally present on the chromium layer was displaced in the vacuum chamber by use of a reversed biased current. The thus-obtained plate of copper with the applied layers of chromium and pure aluminum layer thereon was placed in facing contact with a 12,7 mm (½ inch) thick plate of 1100 series aluminum (EC grade) measuring 152 mm (6 inches) wide by 406 mm (16 inches) long. The aluminum plate faced the pure aluminum layer of the copper plate. The stacked plates of copper and aluminum were then heated to about 427°C (800°F) in a regular atmosphere (containing oxygen) furnace. The heated, stacked plates were then transferred to a rolling mill and hot rolled in one pass with a reduction of 30%, to achieve roll bonding and a final thickness of about 12,7 mm (½ inch) in the copper-aluminum composite plate. The roll bonded composite plate was then heated in an oven at about 288°C (550°F) to further strengthen the roll bond. The copper-aluminum composite plate was then sawed into 76,2 mm (3 inch) squares to form the electrical contacts. Samples were subjected to the standard chisel test and 180° bend test. All of the tests were satisfactory. Subsequent welding of the 1100 series aluminum plate side of the composite to an aluminum electrical bus bar was also successful. The chromium barrier layer separating the pure aluminum layer from the copper substrate was effective in preventing a diffusion between the copper and pure aluminium layers. Thus, no harmful aluminum intermetallic compounds were formed.

It is well-known in the art of metalworking as to what further steps may be required to produce a multilayered composite article such as a cooking utensil after the bonded clad sheet or plate is made. The bonded, clad sheet or plate may be further rolled to a desired thinner gauge and then cut into blanks for drawing into a desired product shape. In this manner, pots, pans, griddles or other products of various configurations may be formed from the composite sheets or plates manufactured by the method of the present invention as defined in the appended claims.

## Claims

1. Method of bonding at least two metal plates or sheets made of dissimilar materials, comprising the steps of:
a) providing a first metal plate or sheet having a ductile oxide surface;
b) applying a barrier layer of chromium to at least one surface of the first metal plate or sheet by electroplating or Physical Vapor Deposition PVD technique in a thickness range of 0,00254 to 0,01016 mm (0.0001 to 0.0004 inch);
c) applying a layer of pure aluminium to the chromium barrier layer by Physical Vapor Deposition PVD technique in a thickness range of 0,00254 to 0,00762 mm (0.0001 to 0.0003 inch);
d) providing at least one second metal plate or sheet;
e) heating said plates or sheets to a hot working temperature;
f) applying pressure to said heated plates or sheets to effect a bond between the applied aluminium surface of the at least one plate or sheet to an adjacent plate or sheet;
and
g) heating the bonded plates or sheets to strengthen the bond.

2. Method as claimed in claim 1, **characterized in that** the first metal plate or sheet is one selected from the group consisting of titanium, carbon steel, copper, copper alloys, brass, aluminium alloys and zinc.

3. Method as claimed in claim 1 or 2, **characterized in that** the heating and applying pressure steps e) and f), respectively, are carried out at a temperature of between 204 to 482° C (400° F to 900° F) in a non-protective atmosphere.

4. Method as claimed in one of claims 1 to 3, **characterized in that** the applying pressure step f) comprises hot rolling and includes a first rolling pass at a 5% reduction in thickness and additional two passes making a total reduction in thickness of 10%.

5. Method as claimed in one of claims 1 to 4, **characterized in that** the heating of the bonded plates or sheets of step g) is conducted at about 288° C (550° F) to effect sintering and further strengthening on the bond.

6. Method as claimed in one of claims 1 to 5, **characterized in that** the barrier layer metal and the pure aluminium layer are applied by a PVD Physical Vapor Deposition technique.

7. Method as claimed in one of claims 1 to 6, **characterized in that** at least one of a second of the two dissimilar metal plates or sheets is selected from the group consisting of stainless steel and EC grade aluminium.

## Patentansprüche

1. Verfahren zum Verbinden mindestens zweier Metallplatten oder - bleche aus unterschiedlichen Materialien, die Schritte umfassend:
a) Bereitstellen einer ersten Metallplatte oder eines Metallblechs, die/das eine dehnbare Oxidoberfläche aufweist;
b) Aufbringen einer Sperrschicht aus Chrom auf mindestens eine Oberfläche der ersten Metallplatte oder des ersten Metallblechs durch Elektroplattieren oder physikalische Dampfbeschichtungstechnik (PVD) in einem Dickenbereich von 0,00254 bis 0,01016 mm (0,0001 bis 0,0004 Zoll);
c) Aufbringen einer Schicht aus reinem Aluminium auf die Chromsperrschicht durch physikalische Dampfbeschichtungstechnik (PVD) in einem Dickenbereich von 0,00254 bis 0,00762 mm (0,0001 bis 0,0003 Zoll);
d) Bereitstellen mindestens einer zweiten Metallplatte oder eines zweiten Metallblechs;
e) Erwärmen der Platten oder Bleche auf eine heiße Arbeitstemperatur;
f) Ausüben von Druck auf die erwärmten Platten oder Bleche, um eine Verbindung zwischen der aufgebrachten Aluminiumoberfläche der mindestens einen Platte oder des mindestens einen Blechs an eine benachbarte Platte oder ein benachbartes Blech zu bewirken;
und
g) Erwärmen der verbundenen Platten oder Bleche, um die Verbindung zu stärken.

2. Verfahren nach Anspruch 1 , **dadurch gekennzeichnet, dass** die erste Metallplatte oder das erste Metallblech eines ist, das aus der Gruppe ausgewählt wurde, die aus Titan, Kohlenstoffstahl, Kupfer, Kupferlegierungen, Messing, Aluminiumlegierungen und Zink besteht.

3. Verfahren nach Anspruch 1 oder 2, **dadurch gekennzeichnet, dass** die Schritte der Erwärmens und des Ausübens von Druck e) bzw. f) bei einer Temperatur von zwischen 204 bis 482°C (400°F bis 900°F) in einer nicht schützenden Atmosphäre durchgeführt werden.

4. Verfahren nach einem der Ansprüche 1 bis 3, **dadurch gekennzeichnet, dass** der Schritt des Ausübens von Druck f) Warmwalzen umfasst und einen ersten Walzdurchgang bei einer 5%-igen Dickenreduktion und zusätzliche zwei Durchgänge umfasst, die eine Gesamtdickenreduktion von 10 % ergeben.

5. Verfahren nach einem der Ansprüche 1 bis 4, **dadurch gekennzeichnet, dass** das Erwärmen der verbundenen Platten oder Bleche aus Schritt g) bei ungefähr 288°C (550°F) durchgeführt wird, um Sintern und weitere Verstärkung der Verbindung zu bewirken.

6. Verfahren nach einem der Ansprüche 1 bis 5, **dadurch gekennzeichnet, dass** das Sperrschichtmetall und die Schicht aus reinem Aluminium mittels einer physikalischen Dampfbeschichtungstechnik (PVD) aufgebracht werden.

7. Verfahren nach einem der Ansprüche 1 bis 6, **dadurch gekennzeichnet, dass** mindestens eine einer zweiten der beiden unterschiedlichen Metallplatten oder -bleche aus der Gruppe ausgewählt wird, die aus Edelstahl und EC-Aluminium.

## Revendications

1. Procédé d'assemblage d'au moins deux tôles ou feuilles de métal faites de matériaux dissemblables, comprenant les étapes consistant à :
a) fournir une première tôle ou feuille de métal ayant une surface d'oxyde ductile ;
b) appliquer une couche barrière de chrome sur au moins une surface de la première tôle ou feuille de métal par une technique de dépôt électrolytique ou dépôt physique en phase gazeuse (PVD) sur une plage d'épaisseurs allant de 0,00254 à 0,01016 mm (0,0001 à 0,0004 pouce) ;
c) appliquer une couche d'aluminium pur sur la couche barrière de chrome par technique de dépôt physique en phase gazeuse (PVD) sur une plage d'épaisseurs allant de 0,00254 à 0,00762 mm (0,0001 à 0,0003 pouce) ;
d) fournir au moins une seconde tôle ou feuille de métal ;
e) chauffer lesdites tôles ou feuilles à une température de travail élevée ;
f) appliquer de la pression auxdites tôles ou feuilles pour effectuer un assemblage entre la surface d'aluminium appliquée de l'au moins une tôle ou feuille et une tôle ou feuille adjacente ;
et
g) chauffer les tôles ou feuilles assemblées pour renforcer l'assemblage.

2. Procédé selon la revendication 1, **caractérisé en ce que** la première tôle ou feuille de métal est choisie dans le groupe consistant en le titane, l'acier au carbone, le cuivre, les alliages de cuivre, le laiton, les alliages d'aluminium, et le zinc.

3. Procédé selon la revendication 1 ou 2, **caractérisé en ce que** les étapes de chauffage et d'application de pression e) et f), respectivement, sont exécutées à une température allant de 204 à 482°C (400°F à 900°F) dans une atmosphère non contrôlée.

4. Procédé selon l'une des revendications 1 à 3, **caractérisé en ce que** l'étape d'application de pression f) comprend un laminage à chaud et comporte une première passe de laminage apportant une réduction de l'épaisseur de 5%, et deux passes supplémentaires apportant une réduction totale de l'épaisseur de 10%.

5. Procédé selon l'une des revendications 1 à 4, **caractérisé en ce que** le chauffage des tôles ou feuilles assemblées à l'étape g) est réalisé à environ 288°C (550°F) pour effectuer un frittage et un renforcement supplémentaire de l'assemblage.

6. Procédé selon l'une des revendications 1 à 5, **caractérisé en ce que** le métal de la couche barrière et la couche d'aluminium pur sont appliqués par technique de dépôt physique en phase gazeuse (PVD).

7. Procédé selon l'une quelconque des revendications 1 à 6, **caractérisé en ce qu'**au moins une d'une seconde tôle ou feuille parmi les deux tôles ou feuilles métalliques dissemblables est choisie dans le groupe comprenant l'acier inoxydable et l'aluminium de qualité EC.
